(19)

**Europäisches Patentamt**
**European Patent Office**
**Office européen des brevets**

(11) **EP 4 650 784 A1**

(12) **EUROPEAN PATENT APPLICATION**
published in accordance with Art. 153(4) EPC

(43) Date of publication:
**19.11.2025 Bulletin 2025/47**

(21) Application number: **23916185.4**

(22) Date of filing: **08.12.2023**

(51) International Patent Classification (IPC):
**G01N 35/10** (2006.01)   **G01N 35/00** (2006.01)

(52) Cooperative Patent Classification (CPC):
**G01N 35/00; G01N 35/10**

(86) International application number:
**PCT/JP2023/044116**

(87) International publication number:
**WO 2024/150570 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.01.2023  JP 2023003866**

(71) Applicant: **HITACHI HIGH-TECH CORPORATION**
**Tokyo 105-6409 (JP)**

(72) Inventors:
• **YOKOTA Koki**
  **Tokyo 105-6409 (JP)**
• **TAKAHASHI Takuya**
  **Tokyo 105-6409 (JP)**
• **NAKAJIMA Satoshi**
  **Tokyo 105-6409 (JP)**

(74) Representative: **Strehl & Partner mbB**
**Maximilianstrasse 54**
**80538 München (DE)**

(54) **AUTOMATIC ANALYSIS DEVICE**

(57)   Provided is an automatic analyzer capable of quickly and accurately calculating a reference position. First coordinates and second coordinates are acquired and coordinates of a contact point where a tip end of a dispensing nozzle 54 is brought into contact with a reference position block 61 is calculated based on the first coordinates and the second coordinates, in which the first coordinates are coordinates of an attachment portion where the dispensing nozzle is attached to a horizontal drive mechanism when the dispensing nozzle is horizontally moved at a constant speed toward a side surface of the reference position block, a contact detector 58 detects that the tip end of the dispensing nozzle is brought into contact with the reference position block, and the horizontal drive mechanism is stopped, and the second coordinates are coordinates of the attachment portion where the dispensing nozzle is attached to the horizontal drive mechanism at a timing when the dispensing nozzle is horizontally moved at the constant speed in a direction away from the side surface of the reference position block from a stop position of the horizontal drive mechanism, the contact detector detects that the tip end of the dispensing nozzle is separated from the reference position block, and the horizontal drive mechanism is stopped.

[FIG. 7]

Start
→ MOVE DISPENSING NOZZLE TO CENTRAL PORTION OF REFERENCE POSITION BLOCK — S01
→ BRING DISPENSING NOZZLE INTO CONTACT WITH REFERENCE POSITION BLOCK AT CONSTANT SPEED, AND ACQUIRE COORDINATES (COORDINATES 1) OF BASE END OF DISPENSING NOZZLE WHEN STOPPED — S02
→ REMOVE DISPENSING NOZZLE FROM REFERENCE POSITION BLOCK AT CONSTANT SPEED, AND ACQUIRE COORDINATES (COORDINATES 2) OF BASE END OF DISPENSING NOZZLE BASE WHEN STOPPED — S03
→ CALCULATE CONTACT POINT COORDINATES BASED ON COORDINATES 1 AND COORDINATES 2 — S04
→ ARE PREDETERMINED CONTACT POINT COORDINATES ACQUIRED? — S05
  No → MOVE DISPENSING NOZZLE TO POSITION WHERE ANOTHER CONTACT POINT COORDINATES CAN BE OBTAINED — S06
  Yes → DETECT POSITION COORDINATES OF REFERENCE POSITION BLOCK FROM A PLURALITY OF CONTACT POINT COORDINATES — S07
→ ARE POSITION COORDINATES OF REFERENCE POSITION BLOCK REQUIRED FOR CORRECTION ACQUIRED? — S08
  Yes → CALCULATE CORRECTION AMOUNT — S09
End

EP 4 650 784 A1

## Description

Technical Field

The present invention relates to an automatic analyzer including a dispensing mechanism.

Background Art

PTL 1 discloses an automatic analyzer capable of automatically correcting a positional deviation based on a change in a relative position between a dispensing mechanism and a first mechanism. Here, the first mechanism is a mechanism that is disposed on a mechanism base same as the dispensing mechanism and has a stop position at which a dispensing nozzle is stopped, and the relative position changes due to strain of the mechanism base. The automatic analyzer is provided with a member indicating a predetermined first position and a member indicating a predetermined second position of the first mechanism on the first mechanism. Since the member is provided on the first mechanism, a positional relationship between the member and the stop position is not changed by the strain of the mechanism base. Therefore, a correction value for correcting the deviation of the stop position is calculated based on a positional deviation of the first position and the second position indicating a deviation of the relative position between the dispensing mechanism and the first mechanism obtained by detecting the member by the dispensing nozzle and detecting the first position and the second position.

Further, PTL 1 illustrates a cylindrical member, and discloses that the dispensing nozzle is brought into contact with an inner wall surface of a cylinder to specify the first position or the second position.

Citation List

Patent Literature

PTL 1: WO2022/196272

Summary of Invention

Technical Problem

The first mechanism in PTL 1 is a mechanism such as a reagent disk, a reaction disk, or a cleaning tank. As the number of dispensing mechanisms and stop positions thereof increases, the number of members indicating the first position and the second position (hereinafter referred to as reference position blocks) also increases. Since a measurement by the automatic analyzer cannot be performed during correction value calculation processing of calculating the correction value for correcting the deviation of the stop position, it is necessary to complete the correction value calculation processing as quickly as possible.

However, when an arm is moved at a high speed in order to bring the dispensing nozzle into contact with the reference position block, the dispensing nozzle is brought into contact with the reference position block in a bent state due to a control delay until the dispensing mechanism detects that the dispensing nozzle is brought into contact with the reference position block and stops the arm. In this case, an error of the specified position of the reference position block is large, and correction accuracy decreases. On the other hand, if the dispensing nozzle is moved manually or at a low speed such that deflection does not occur even if the dispensing nozzle is brought into contact with the reference position block, the correction accuracy is improved, but a time required for the correction value calculation processing becomes long.

Solution to Problem

An automatic analyzer according to an aspect of the invention includes: a dispensing mechanism including a horizontal drive mechanism to which a dispensing nozzle is attached, the horizontal drive mechanism being configured to horizontally move the dispensing nozzle, and a contact detector configured to detect contact of a tip end of the dispensing nozzle with a conductor; a reference position block that is a conductor; and a control unit configured to control the dispensing mechanism. The control unit acquires first coordinates and second coordinates and calculates coordinates of a contact point where the tip end of the dispensing nozzle is brought into contact with the reference position block based on the first coordinates and the second coordinates, the first coordinates being coordinates of an attachment portion where the dispensing nozzle is attached to the horizontal drive mechanism when the dispensing nozzle is horizontally moved at a constant speed toward a side surface of the reference position block, the contact detector detects that the tip end of the dispensing nozzle is brought into contact with the reference position block, and the horizontal drive mechanism is stopped, the second coordinates being coordinates of the attachment portion where the dispensing nozzle is attached to the horizontal drive mechanism at a timing when the dispensing nozzle is horizontally moved at the constant speed in a direction away from the side surface of the reference position block from a stop position of the horizontal drive mechanism, the contact detector detects that the tip end of the dispensing nozzle is separated from the reference position block, and the horizontal drive mechanism is stopped.

Advantageous Effects of Invention

An automatic analyzer capable of quickly and accurately calculating a reference position is provided. Other technical problems and novel features will become apparent from description of the present description and the accompanying drawings.

Brief Description of Drawings

[FIG. 1] FIG. 1 shows an overall configuration example of an automatic analyzer.
[FIG. 2] FIG. 2 shows a configuration example of a dispensing mechanism including two horizontal drive shafts.
[FIG. 3] FIG. 3 is a front view showing a state where a dispensing nozzle is brought into contact with a reference position block.
[FIG. 4] FIG. 4 is a top view showing the state where the dispensing nozzle is brought into contact with the reference position block.
[FIG. 5] FIG. 5 is a front view showing a state where the dispensing nozzle is separated from the reference position block and stopped.
[FIG. 6] FIG. 6 is a top view showing the state where the dispensing nozzle is separated from the reference position block and stopped.
[FIG. 7] FIG. 7 is a flowchart showing an overview of a stop position correction method for the dispensing nozzle.
[FIG. 8] FIG. 8 is a diagram showing a positional relationship between coordinates 1, coordinates 2, and contact point coordinates.
[FIG. 9] FIG. 9 is a motion trajectory image of the dispensing nozzle for acquiring a plurality of contact point coordinates.
[FIG. 10] FIG. 10 is a diagram showing an arm rotation amount control value conversion method based on a two-dimensional coordinate system.
[FIG. 11] FIG. 11 is a diagram showing the arm rotation amount control value conversion method based on the two-dimensional coordinate system.

Description of Embodiments

An embodiment of the present invention will be described in detail with reference to the drawings. In the following embodiment, components (also including element steps and the like) thereof are not necessarily essential unless otherwise specified or unless clearly considered to be essential in principle.

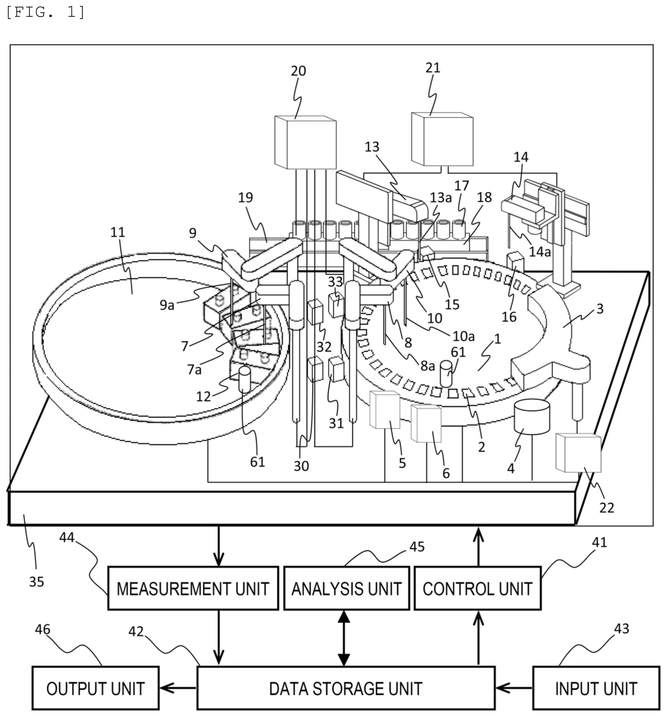

FIG. 1 shows an overall configuration example of an automatic analyzer. The automatic analyzer schematically includes a sample transport mechanism 19, a reagent disk 11, a reaction disk 1, sample dispensing mechanisms 13, 14, reagent dispensing mechanisms 7, 8, 9, 10, stirring mechanisms 5, 6, a spectrophotometer 4, a cleaning mechanism 3, cleaning tanks 15, 16, 30, 31, 32, 33, a reagent pump 20, a sample pump 21, a cleaning pump 22, a control unit 41 that controls the units of the automatic analyzer, a data storage unit 42 that stores various types of data, an input unit 43 that inputs necessary data from the outside to the data storage unit 42, a measurement unit 44 that calculates an absorbance from a light amount obtained by the spectrophotometer 4, an analysis unit 45 that calculates a component amount from the absorbance, and an output unit 46 that displays and outputs data to the outside. In addition, a reference position block 61 for correcting a stop position of a dispensing nozzle is disposed in a movable range of the dispensing mechanism and on the mechanism in which the stop position of the dispensing nozzle is provided. FIG. 1 shows an example in which the reference position blocks 61 are disposed on the reaction disk 1 and the reagent disk 11.

The sample transport mechanism 19 transports a rack (transport member) 18 on which one or more sample containers 17 accommodating samples to be analyzed are mounted. In the reagent disk 11, a plurality of reagent bottles 12 accommodating reagents to be used for sample analysis are disposed side by side in a circumferential direction. In the reaction disk 1, a plurality of reaction containers 2 for mixing and reacting the samples and the reagents are disposed side by side in the circumferential direction. The sample dispensing mechanisms 13, 14 dispense the sample from the sample container 17 transported to a sample dispensing position by the sample transport mechanism 19 into the reaction container 2. The reagent dispensing mechanisms 7, 8, 9, 10 dispense the reagent from the reagent bottle 12 into the reaction container 2. The stirring mechanisms 5, 6 stir a mixed liquid (reaction liquid) of the sample and the reagent dispensed into the reaction container 2. The spectrophotometer 4 receives transmitted light or scattered light obtained by irradiating the reaction liquid in the reaction container 2 with light from a light source (not shown). The cleaning mechanism 3 cleans the used reaction container 2. The sample nozzle cleaning tanks 15, 16 are disposed in movable ranges of the sample dispensing mechanisms 13, 14, and clean sample nozzles 13a, 14a with cleaning water, respectively. The reagent nozzle cleaning tanks 30, 31, 32, 33 are disposed in movable ranges of the reagent dispensing mechanisms 7, 8, 9, 10, and clean reagent nozzles 7a, 8a, 9a, 10a with the cleaning water, respectively.

The component amount of the sample is analyzed by the following procedure. First, the sample in the sample container 17 placed on the rack 18 transported near the reaction disk 1 by the sample transport mechanism 19 is dispensed into the reaction container 2 on the reaction disk 1 by the sample nozzles 13a (or 14a) of the sample dispensing mechanism 13 (or 14). Next, the reagent to be used for analysis is dispensed from the reagent bottle 12 on the reagent disk 11 to the reaction container 2 into which the sample is previously dispensed by the reagent nozzle 7a (or 8a, 9a, 10a) of the reagent dispensing mechanism 7 (or 8, 9, 10). Subsequently, the stirring mechanism 5 (or 6) stirs the mixed liquid of the sample and the reagent in the reaction container 2. Thereafter, the light generated from the light source transmits through the reaction container 2 containing the mixed liquid after stirring, a light intensity of the transmitted light or the scattered light is measured by the spectrophotometer 4 and the measurement unit 44, and measured data is stored in the data storage unit 42 as absorbance data. The stored absorbance data is analyzed by the analysis unit 45 based on calibration curve data and a Lambert-Beer's law. By this analysis, the component amount contained in the sample can be analyzed. Data necessary for control and analysis of each unit is received from the input unit 43 to the data storage unit 42. Various types of data and analysis results are displayed and/or output by the output unit 46.

The above is a configuration example when the automatic analyzer performs biochemical analysis, and a measurement mechanism differs depending on an analysis content executed by the automatic analyzer. As a measurement method used in the automatic analyzer, an analysis method (colorimetric analysis) using a reagent that changes a color of the reaction liquid by reacting with an analysis target component in the sample, an analysis method (immunoassay) using a reagent in which a label is added to a substance that specifically binds directly or indirectly to the analysis target component in the sample and counting the label, and the like are known. Each method includes a step of dispensing the sample accommodated in the sample container or the reagent accommodated in the reagent bottle into the reaction container by a dispensing mechanism and mixing the sample and the reagent. The dispensing mechanism of the present embodiment described below is applicable to an automatic analyzer capable of executing analysis including the dispensing step.

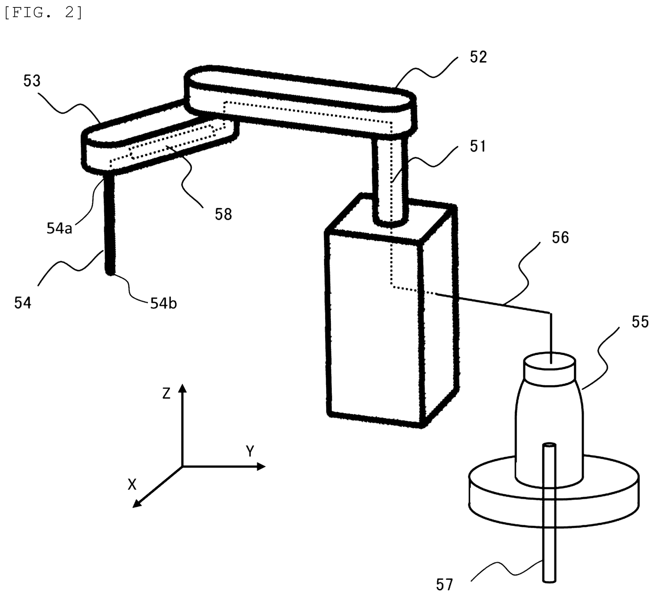

FIG. 2 shows a configuration example of the dispensing mechanism of the present embodiment. In this embodiment, one end portion of a $\theta_1$ arm 52 is attached to an upper end position of a vertically drivable shaft 51 so as to be rotatable in an XY plane. In addition, one end portion of a $\theta_2$ arm 53 is attached to a tip end position which is a free end of the $\theta_1$ arm 52 so as to be rotatable in the XY plane. In addition, a dispensing nozzle 54 is attached to a tip end position which is a free end of the $\theta_2$ arm 53 so as to extend downward in a Z-axis direction (vertical direction). The dispensing nozzle 54 and a syringe 55 are connected via a tube 56. The tube 56 passes from a pedestal of the shaft 51 through the shaft 51, the $\theta_1$ arm 52, and the $\theta_2$ arm 53, and is connected to one end side of the dispensing nozzle 54. A plunger 57 for varying an internal volume of the syringe 55 is movably attached to the syringe 55. The sample or the reagent is aspirated or discharged from a tip end of the dispensing nozzle 54 according to a movement position of the plunger 57. In addition, the dispensing nozzle 54 is connected to a capacitance type of a contact detector 58, and the contact detector 58 can detect that the dispensing nozzle 54 is brought into contact with a conductor such as the sample or the reagent. Since the $\theta_1$ arm 52 and the $\theta_2$ arm 53 horizontally move the dispensing nozzle 54, the $\theta_1$ arm

52 and the $\theta_2$ arm 53 are collectively referred to as a horizontal drive mechanism.

A main cause of a change in a relative position among the dispensing mechanism, the reaction disk 1 in which the stop position of the dispensing nozzle is provided, and the reagent disk 11 or the cleaning tank is that a load balance of the entire automatic analyzer changes due to transportation, a temporal change, or the like, and a mechanism base 35 (see FIG. 1) is distorted. Due to the strain of the mechanism base 35, the relative position between the dispensing mechanism and the mechanism in which the stop position of the dispensing nozzle is provided is deviated. By correcting the stop position of the dispensing nozzle by a deviation amount of the relative position, the dispensing by the dispensing mechanism and the cleaning of the dispensing nozzle can be appropriately performed.

Hereinafter, an example in which the reference position block 61 is a cylinder and a circular recess is provided at a center of the cylinder will be described. A shape of the reference position block 61 is not limited to the illustrated shape. As will be described later, in the present embodiment, a position of the reference position block 61 is specified by bringing a tip end 54b of the dispensing nozzle 54 into contact with a side surface 61a of the circular recess and fitting a plurality of contact point coordinates to a contour shape of the side surface 61a of the circular recess. Therefore, as the shape of the circular recess, any shape such as a quadrangle can be used as long as the contour shape thereof is a known shape defined to be capable of fitting. Further, the shape is not limited to the recess, and may be a hole penetrating the cylinder. However, in any case, it is preferable that the contour shape can be fitted with high accuracy even when the number of contact points is small. A material of the reference position block 61 is a conductive material detectable by the contact detector 58, for example, metal.

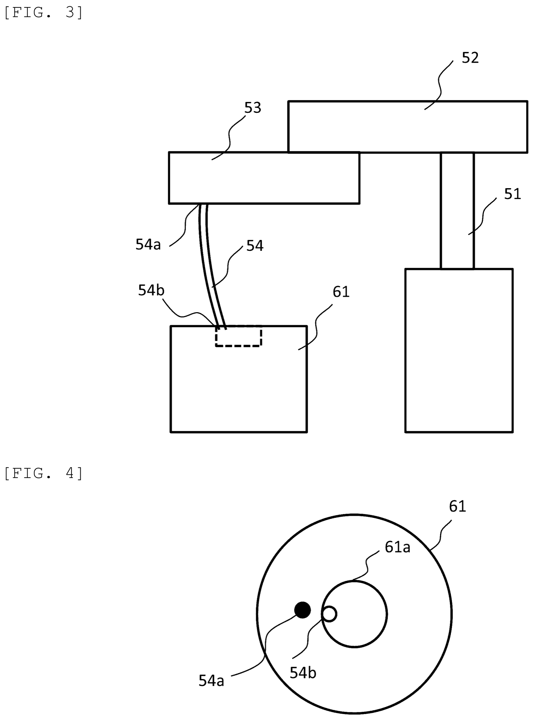

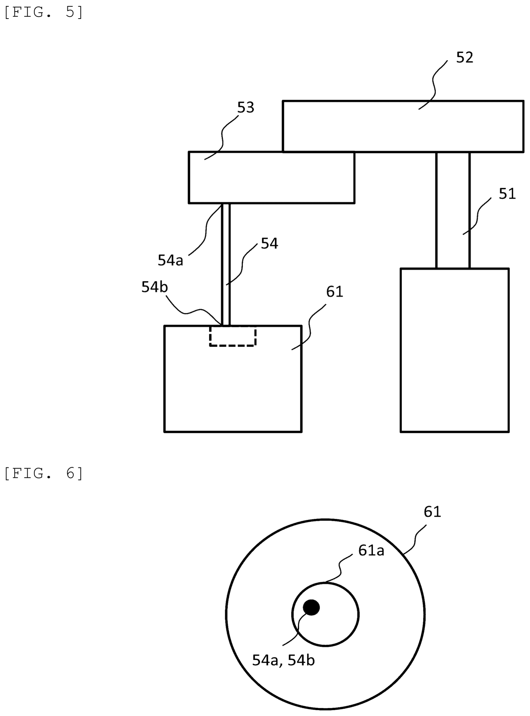

FIGS. 3 and 4 show a state in which the dispensing nozzle 54 is brought into contact with the side surface of the circular recess of the reference position block 61 and stopped. FIGS. 5 and 6 show a state in which the dispensing nozzle 54 is separated from the circular recess of the reference position block 61 and stopped. Here, FIGS. 3 and 5 are diagrams of the reference position block 61 viewed from a horizontal direction, and FIGS. 4 and 6 are diagrams of the reference position block 61 viewed from the vertical direction. FIGS. 3 and 4 show a state in which the $\theta_2$ arm 53 is stopped by a contact detection signal from the contact detector 58, but the dispensing nozzle 54 is deflected due to a control delay from when the contact detection signal is received to when the $\theta_2$ arm 53 is stopped. The deflection of the dispensing nozzle 54 due to such a control delay reduces accuracy of specifying the position of the reference position block 61 and reduces accuracy of correcting the stop position of the dispensing nozzle.

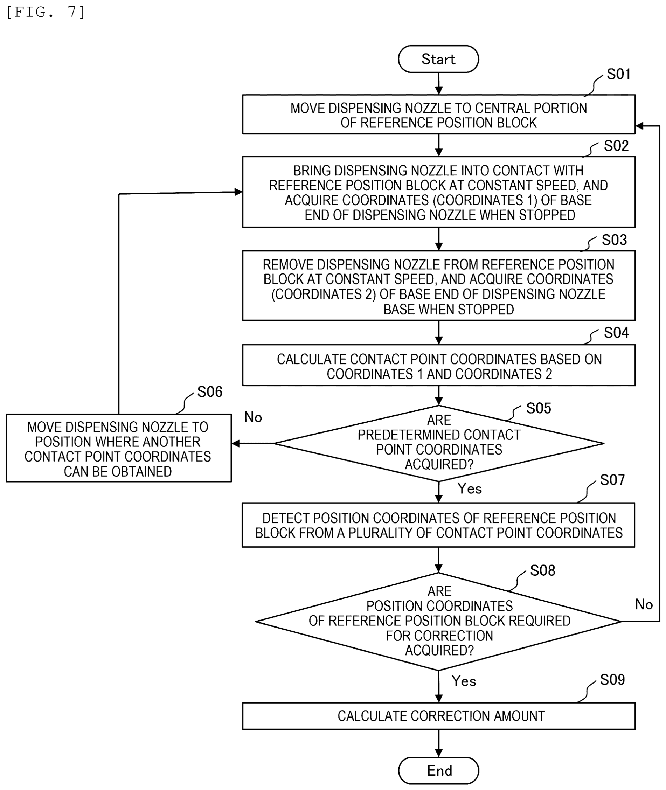

Hereinafter, a method for detecting the position of the reference position block and a method for correcting the stop position of the dispensing nozzle in the present embodiment will be described. FIG. 7 is a flowchart showing an overview of a stop position correction method for the dispensing nozzle of the present embodiment. This operation is automatically executed when a user performs maintenance from the input unit 43 at any timing or after performing a reset operation in an analysis preparation operation. Accordingly, it is possible to avoid continuing the analysis while the stop position of the dispensing nozzle is shifted.

The control unit 41 reads position information data (position adjustment value) of the reference position block 61 stored in the data storage unit 42, horizontally moves the dispensing nozzle 54 to a central portion of the reference position block 61, and then drives the shaft 51 such that a height of the tip end 54b of the dispensing nozzle 54 is moved to a position lower than an upper surface of the reference position block 61 (step S01). The position adjustment value refers to the position information data obtained by an actual machine in order to absorb an error at the time of manufacture or assembly for each stop position of the dispensing nozzle 54 at the time of installation of the automatic analyzer, and is stored in the data storage unit 42. The reference position block 61 is also included as the stop position of the dispensing nozzle 54.

Thereafter, the dispensing mechanism drives the $\theta_2$ arm 53 at a constant speed, so that the dispensing nozzle 54 is brought into contact with the side surface 61a of the circular recess of the reference position block 61. The contact detector 58 detects that the dispensing nozzle 54 is brought into contact with the side surface 61a of the circular recess and outputs the contact detection signal, and the dispensing mechanism receives the contact detection signal from the contact detector 58 and stops the driving of the $\theta_2$ arm 53. By setting a driving speed of the $\theta_2$ arm 53 to be high, a time required for correcting the stop position of the dispensing nozzle can be shortened. In addition, it is desirable to set a maximum movement amount of the $\theta_2$ arm 53 in preparation for a case where the driving of the $\theta_2$ arm 53 is not stopped by the contact detection signal for some reason. The maximum movement amount at this time is a movement amount to an extent that the dispensing nozzle 54 is not plastically deformed by the driving of the $\theta_2$ arm 53 after the tip end 54b of the dispensing nozzle 54 comes into contact with the side surface 61a of the circular recess. Here, position coordinates (coordinates 1) of a base end (attachment portion) 54a of the dispensing nozzle 54 when the $\theta_2$ arm 53 is stopped are acquired by the contact detection signal and stored in the data storage unit 42 (S02). FIGS. 3 and 4 show the state of the dispensing nozzle in step S02, the dispensing nozzle 54 is elastically deformed, and the base end 54a and the tip end 54b of the dispensing nozzle 54 have different position coordinates.

Subsequently, the dispensing mechanism drives the $\theta_2$ arm 53 in a direction opposite to that in step S02 at the same constant speed as that in step S02, so that the dispensing nozzle 54 is separated from the side surface 61a of the circular recess of the reference position block 61. The contact detector 58 detects that the dispensing nozzle 54 is separated from the side surface 61a of the circular recess and outputs a separation detection signal, and the dispensing mechanism receives the separation detection signal from the contact detector 58 and stops the driving of the $\theta_2$ arm 53. The contact and separation of the dispensing nozzle 54 with respect to the side surface 61a of the circular recess may be determined by ON and OFF of the contact detection signal. In addition, it is desirable to set the maximum movement amount of the $\theta_2$ arm 53 in preparation for a case where the driving of the $\theta_2$ arm 53 is not stopped by OFF of the separation detection signal or the contact detection signal for some reason. The maximum movement amount at this time may be larger than the maximum movement amount in step S01 since the dispensing nozzle 54 moves in a direction separated from the side surface 61a of the circular recess. Here, position coordinates (coordinates 2) of the base end 54a of the dispensing nozzle 54 when the $\theta_2$ arm 53 is stopped by the separation detection signal (or OFF of the contact detection signal) are acquired and stored in the data storage unit 42 (S03).

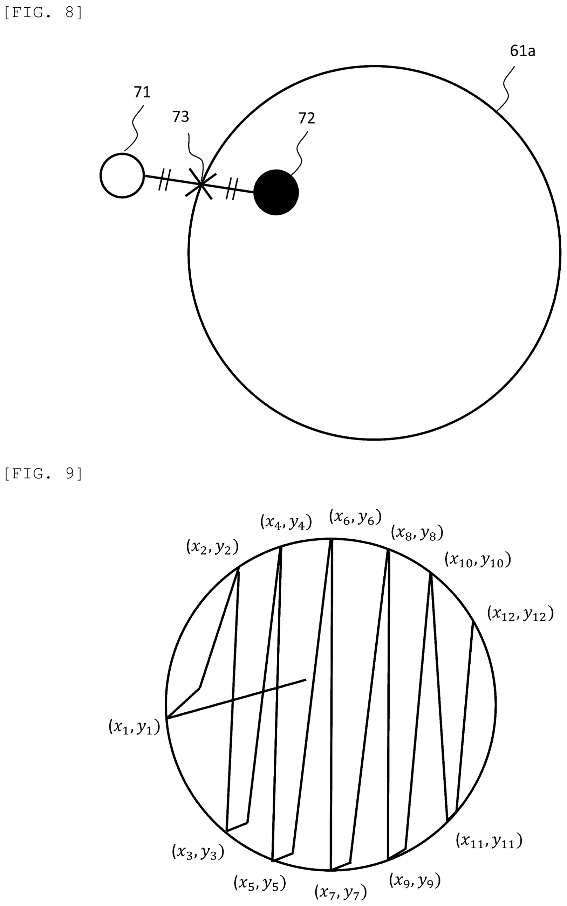

Thereafter, the control unit 41 calculates coordinates of a contact point 73 based on the coordinates 1 and the coordinates 2 (S04). FIG. 8 shows a positional relationship among a position 71 having the coordinates 1, a position 72 having the coordinates 2, and the coordinates of the contact point 73. The position 71 having the coordinates 1 is located outside the side surface 61a of the circular recess by an amount of movement from when the contact detector 58 detects that the dispensing nozzle 54 is brought into contact with the side surface 61a of the circular recess at the contact point 73 to when the $\theta_2$ arm 53 stops due to the control delay. The position 72 having the coordinates 2 is located inside the side surface 61a of the circular recess by an amount of movement from when the contact detector 58 detects that the dispensing nozzle 54 is separated from the side surface 61a of the circular recess at the contact point 73 to when the $\theta_2$ arm 53 stops due to the control delay. Here, in steps S02 and S03, since the $\theta_2$ arm 53 is moved at the same constant speed, the contact point coordinates can be calculated as a midpoint of a line segment connecting the coordinates 1 and the coordinates 2. The control unit 41 stores the calculated contact point coordinates in the data storage unit 42.

Since the position of the reference position block 61 is determined by obtaining the contour of the side surface 61a of the circular recess, it is necessary to acquire a plurality of contact point coordinates. Therefore, if the coordinates of the contact point sufficient for fitting is not acquired (No in S05), the control unit 41 continues to acquire the contact point coordinates.

FIG. 9 shows a motion trajectory image of the dispensing nozzle 54 for acquiring the contact point coordinates. Here, an example of a motion trajectory for continuously acquiring contact point coordinates $(x_1, y_1)$ to $(x_{12}, y_{12})$ is shown. Here, in order to calculate coordinates at a contact point different from the contact point whose coordinates are already acquired, the $\theta_1$ arm 52 is slightly moved (step S06), and processing of steps S02 to S04 is executed again. Accordingly, a large number of contact point coordinates are acquired. When predetermined contact point coordinates (for example, twelve contact point coordinates in the example of FIG. 9) are acquired (Yes in S05), position coordinates of the reference position block 61 are calculated from the acquired contact point coordinates (S07). When the position of the reference position block 61 is defined as a center position thereof, in this example, since a center of the reference position block 61 is a center of the circular recess, a circle that best fits the acquired twelve contact point coordinates can be calculated, and coordinates of a center of the obtained circle can be calculated as the position coordinates of the reference position block 61.

In this manner, by setting a side surface of the reference position block 61 with which the dispensing nozzle 54 is brought into contact as the side surface of the recess or the hole, it is possible to acquire a large number of contact point coordinates at a higher speed. That is, although the example in which the position coordinates when the $\theta_2$ arm 53 is stopped are acquired in step S03 is described, the $\theta_2$ arm 53 is not stopped by the separation detection signal (or OFF of the contact detection signal), and is continuously moved at a constant speed until the contact detector 58 detects that the dispensing nozzle 54 is brought into contact with the side surface of the recess or the hole at a next contact point. In this case, for the coordinates 2, by acquiring the position coordinates of the base end 54a of the dispensing nozzle 54 at the timing when the $\theta_2$ arm 53 is stopped in response to OFF of the separation detection signal or the contact detection signal, it is not necessary to actually stop the $\theta_2$ arm 53, which leads to shortening in a processing time.

If the position coordinates of the reference position block 61 required for correction is not acquired (No in S08), the control unit 41 continues to acquire position coordinates of another reference position block 61, and if the position coordinates of the reference position block 61 required for correction is acquired (Yes in S08), the control unit 41 corrects the stop position of the dispensing nozzle (S09). The processing may proceed to step S09 after the acquisition of the position coordinates of all the reference position blocks 61 disposed in the automatic analyzer is completed.

In step S09, the control unit 41 first checks, for each stop position of the dispensing nozzle 54, whether there is a deviation in the position coordinates of the reference position block 61 used for the correction thereof. If the deviation of the position coordinates of the reference position block 61 is within an allowable range, the processing ends without performing correction.

When the deviation of the position coordinates of the reference position block 61 exceeds the allowable range, a correction value is calculated. Since a positional relationship among a position of a first reference position block, a position of a second reference position block, and a stop position of the dispensing nozzle 54 on the same mechanism does not change, a correction amount of the stop position of the dispensing nozzle 54 can be calculated from a positional deviation of the first reference position block and a positional deviation of the second reference position block. The control unit 41 stores the calculated correction amount in the data storage unit 42. The dispensing mechanism can stop the dispensing nozzle at an appropriate position regardless of the state of the mechanism base 35 by stopping the dispensing nozzle at a position obtained by adding the correction amount to the position adjustment value.

In the above description, the movement of the dispensing nozzle 54 in the horizontal direction is represented by a two-dimensional coordinate system having an X-axis direction and a Y-axis direction. On the other hand, the dispensing mechanism moves the dispensing nozzle to a desired position by rotating the arm as shown in FIG. 2. The two-dimensional coordinate system $(x, y)$ can be replaced with a rotation amount of the arm as follows.

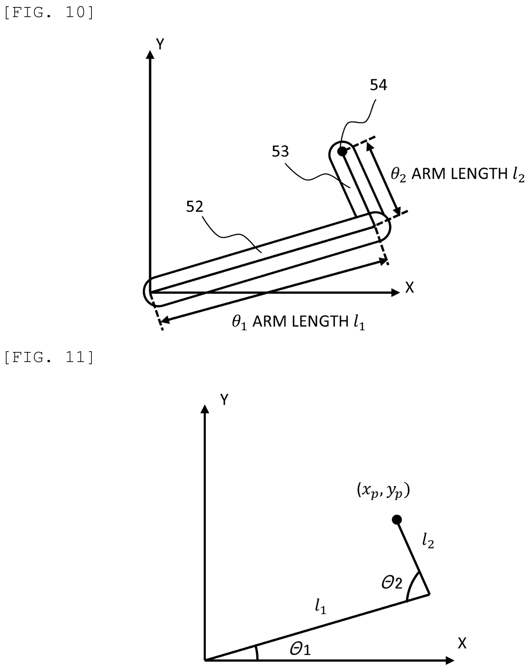

FIG. 10 shows a correspondence between the two-dimensional coordinate system and the horizontal drive mechanism in the dispensing mechanism shown in FIG. 2. In the two-dimensional coordinate system, a connection position between the shaft 51 and the $\theta_1$ arm 52 is set as a coordinate origin. An arm length of the $\theta_1$ arm 52 is $l_1$, and an arm length of the $\theta_2$ arm 53 is $l_2$.

Each of the $\theta_1$ arm 52 and the $\theta_2$ arm 53 is driven by a stepping motor. In this case, an angle of each arm can be obtained from initial angles of the $\theta_1$ arm 52 and the $\theta_2$ arm 53 before driving, the number of movement pulses giving the movement amount (rotation amount) with respect to the initial angles, and a movement angle resolution indicating an angle at which the arm is rotated by one pulse.

When the coordinates of the base end 54a of the dispensing nozzle 54 in the two-dimensional coordinate system $(x, y)$ are $(x_p, y_p)$, since the dispensing mechanism shown in FIG. 10 is represented as FIG. 11, a relationship shown in (Math. 1) is established.

[Math. 1]

$$x_p = l_1 \cos\theta_1 + l_2 \cos(\pi - \theta_2 + \theta_1)$$

$$y_p = l_1 \sin\theta_1 + l_2 \sin(\pi - \theta_2 + \theta_1)$$

Accordingly, the position specified in the two-dimensional coordinate system $(x, y)$ can be converted into a control value of the rotation amount of the arm. Here, an example of the dispensing mechanism in which the horizontal movement mechanism including two rotational drive shafts is mounted is described, but the same applies to a horizontal movement mechanism including one or more rotational drive shaft and a dispensing mechanism in which a horizontal movement mechanism including both a rotational drive shaft and a linear drive shaft is mounted. Here, the rotational drive shaft refers to a drive shaft for rotationally moving the dispensing nozzle 54, and the linear drive shaft refers to a drive shaft for linearly moving the dispensing nozzle 54.

Some or all of the configurations, functions, and processing units described above may be implemented by, for example, an integrated circuit or other hardware. The above configurations, functions, or the like may be implemented by a processor interpreting and executing a program for implementing each function. That is, the above configurations, functions, or the like may be implemented as software. Information such as a program, a table, and a file for implementing each function can be stored in a recording device such as a memory, a hard disk, and a solid state drive (SSD), or in a recording medium such as an IC card, an SD card, and a DVD.

In addition, control lines and information lines indicate lines considered to be necessary for description, and do not indicate all control lines and information lines necessary for a product. Actually, it may be considered that almost all the configurations are connected to one another.

The invention is not limited to the above embodiment, and includes various modifications. In the present embodiment, the example is shown in which the position of the reference position block is detected in order to correct the stop position of the dispensing nozzle, but when the position of the reference position block is detected for a different purpose, the method disclosed in the present embodiment may be applied. The embodiment described above has been described in detail to describe the invention in an easy-to-understand manner, and the invention is not necessarily limited to those including all configurations described above. In addition, a part of a configuration according to a certain embodiment can be replaced with a configuration according to another embodiment, and a configuration according to another embodiment can be added to a configuration according to a certain embodiment. In addition, another configuration can be added to, deleted from, or replaced with a part of a configuration of each embodiment.

Reference Signs List

    1: reaction disk
    2: reaction container
    3: cleaning mechanism
    4: spectrophotometer
    5, 6: stirring mechanism
    7, 8, 9, 10: reagent dispensing mechanism

    7a, 8a, 9a, 10a: reagent nozzle
    11: reagent disk
    12: reagent bottle
    13, 14: sample dispensing mechanism
    13a, 14a: sample nozzle
    15, 16: sample nozzle cleaning tank
    17: sample container
    18: rack (transport member)
    19: sample transport mechanism
    20: reagent pump
    21: sample pump
    22: cleaning pump
    30, 31, 32, 33: reagent nozzle cleaning tank
    35: mechanism base
    41: control unit
    42: data storage unit
    43: input unit
    44: measurement unit
    45: analysis unit
    46: output unit
    51: shaft
    52: $\theta_1$ arm
    53: $\theta_2$ arm
    54: dispensing nozzle
    54a: base end (attachment portion)
    54b: tip end
    55: syringe
    56: tube
    57: plunger
    58: contact detector
    61: reference position block
    61a: side surface of circular recess
    71: position having coordinates 1
    72: position having coordinates 2
    73: contact point

**Claims**

1. An automatic analyzer comprising:

    a dispensing mechanism including a horizontal drive mechanism to which a dispensing nozzle is attached, the horizontal drive mechanism being configured to horizontally move the dispensing nozzle, and a contact detector configured to detect contact of a tip end of the dispensing nozzle with a conductor;
    a reference position block that is a conductor; and
    a control unit configured to control the dispensing mechanism, wherein
    the control unit acquires first coordinates and second coordinates and calculates coordinates of a contact point where the tip end of the dispensing nozzle is brought into contact with the reference position block based on the first coordinates and the second coordinates, the first coordinates being coordinates of an attachment portion where the dispensing nozzle is attached to the horizontal drive mechanism when the dispensing nozzle is horizontally moved at a constant speed toward a side surface of the reference position block, the contact detector detects that the tip end of the dispensing nozzle is brought into contact with the reference position block, and the horizontal drive mechanism is stopped, the second coordinates being coordinates of the attachment portion where the dispensing nozzle is attached to the horizontal drive mechanism at a timing when the dispensing nozzle is horizontally moved at the constant speed in a direction away from the side surface of the reference position block from a stop position of the horizontal drive mechanism, the contact detector detects that the tip end of the dispensing nozzle is separated from the reference position block, and the horizontal drive mechanism is stopped.

2. The automatic analyzer according to claim 1, wherein
the control unit sets maximum movement amounts of the horizontal drive mechanism when the first coordinates and the second coordinates are respectively acquired, and the maximum movement amount of the horizontal drive mechanism when acquiring the second coordinates is set larger than the maximum movement amount of the horizontal drive mechanism when acquiring the first coordinates.

3. The automatic analyzer according to claim 1, wherein
the control unit sets the maximum movement amount of the horizontal drive mechanism when acquiring the first coordinates as a movement amount in which the dispensing nozzle is not plastically deformed by driving of the horizontal drive mechanism after the tip end of the dispensing nozzle is brought into contact with the reference position block.

4. The automatic analyzer according to claim 1, wherein
the control unit acquires coordinates of a plurality of contact points by bringing the tip end of the dispensing nozzle into contact with the side surface of the reference position block a plurality of times at different positions, and calculates a position of the reference position block from a shape obtained by fitting a known shape of the side surface of the reference position block to the acquired coordinates of the plurality of contact points.

5. The automatic analyzer according to claim 4, wherein
in
the reference position block has, on an upper surface thereof, a recess having the known shape or a hole having the known shape, and the control unit brings the tip end of the dispensing nozzle into contact with a side surface of the recess or the hole of the reference position block.

6. The automatic analyzer according to claim 5, wherein
after acquiring the first coordinates, the control unit horizontally moves the dispensing nozzle at the constant speed in the direction away from the side surface of the reference position block from the stop position of the horizontal drive mechanism until the contact detector detects that the tip end of the dispensing nozzle is brought into contact with the side surface of the recess or the hole and the horizontal drive mechanism is stopped.

7. The automatic analyzer according to claim 6, wherein
the horizontal drive mechanism includes a first drive shaft and a second drive shaft to which the dispensing nozzle is attached, and the control unit horizontally moves the second drive shaft at the constant speed, and slightly drives the first drive shaft within a period from when the tip end of the dispensing nozzle is brought into contact with the side surface of the recess or the hole at a certain contact point to when the tip end of the dispensing nozzle is brought into contact with the side surface of the recess or the hole at a next contact point.

8. The automatic analyzer according to claim 7, wherein
the first drive shaft is a linear drive shaft that linearly moves the dispensing nozzle or a rotational drive shaft that rotationally moves the dispensing nozzle, and the second drive shaft is a rotational drive shaft.

9. The automatic analyzer according to claim 1, further comprising:

a first mechanism to which a stop position of the dispensing nozzle is set; and a mechanism base on which the dispensing mechanism and the first mechanism are arranged, wherein
a plurality of the reference position blocks are arranged on the first mechanism, and the control unit acquires coordinates of a plurality of contact points by bringing the tip end of the dispensing nozzle into contact with the side surface of the reference position block a plurality of times at different positions, calculates a position of the reference position block from the acquired coordinates of the plurality of contact points, and calculates a correction amount for correcting a positional deviation of the stop position of the dispensing nozzle based on positional deviations of the plurality of reference position blocks.

[FIG. 1]

MEASUREMENT UNIT  ANALYSIS UNIT  CONTROL UNIT

OUTPUT UNIT  ←  DATA STORAGE UNIT  ←  INPUT UNIT

[FIG. 2]

[FIG. 3]

[FIG. 4]

[FIG. 5]

[FIG. 6]

[FIG. 7]

```
                              ( Start )
                                 │
                                 ▼                              ⌐ S01
              ┌──────────────────────────────────────┐
              │ MOVE DISPENSING NOZZLE TO CENTRAL     │◄──────┐
              │ PORTION OF REFERENCE POSITION BLOCK   │       │
              └──────────────────────────────────────┘       │
                                 │                  ⌐ S02     │
                                 ▼                            │
              ┌──────────────────────────────────────┐       │
       ┌─────►│ BRING DISPENSING NOZZLE INTO CONTACT  │       │
       │      │ WITH REFERENCE POSITION BLOCK AT      │       │
       │      │ CONSTANT SPEED, AND ACQUIRE           │       │
       │      │ COORDINATES (COORDINATES 1) OF BASE   │       │
       │      │ END OF DISPENSING NOZZLE WHEN STOPPED │       │
       │      └──────────────────────────────────────┘       │
       │                         │                  ⌐ S03     │
       │                         ▼                            │
       │      ┌──────────────────────────────────────┐       │
       │      │ REMOVE DISPENSING NOZZLE FROM         │       │
       │      │ REFERENCE POSITION BLOCK AT CONSTANT  │       │
       │      │ SPEED, AND ACQUIRE COORDINATES        │       │
       │      │ (COORDINATES 2) OF BASE END OF        │       │
       │      │ DISPENSING NOZZLE BASE WHEN STOPPED   │       │
       │      └──────────────────────────────────────┘       │
       │                         │                  ⌐ S04     │
       │                         ▼                            │
       │      ┌──────────────────────────────────────┐       │
       │      │ CALCULATE CONTACT POINT COORDINATES   │       │
       │      │ BASED ON COORDINATES 1 AND            │       │
       │      │ COORDINATES 2                         │       │
       │      └──────────────────────────────────────┘       │
       │  ⌐ S06                  │                  ⌐ S05     │
  ┌──────────────┐          No  ◇◇◇◇◇◇◇◇◇◇◇◇◇               │
  │MOVE DISPENSING│             ◇     ARE      ◇               │
  │NOZZLE TO      │◄────────────◇ PREDETERMINED◇               │
  │POSITION WHERE │             ◇ CONTACT POINT◇               │
  │ANOTHER CONTACT│             ◇ COORDINATES  ◇               │
  │POINT          │             ◇  ACQUIRED?   ◇               │
  │COORDINATES CAN│              ◇◇◇◇◇◇◇◇◇◇◇◇◇               │
  │BE OBTAINED    │                   │ Yes              ⌐ S07 │
  └──────────────┘                   ▼                        │
              ┌──────────────────────────────────────┐       │
              │ DETECT POSITION COORDINATES OF        │       │
              │ REFERENCE POSITION BLOCK FROM A       │       │
              │ PLURALITY OF CONTACT POINT COORDINATES│       │
              └──────────────────────────────────────┘       │
                                 │                  ⌐ S08     │
                                 ▼                            │
                         ◇◇◇◇◇◇◇◇◇◇◇◇◇◇                      │
                        ◇      ARE       ◇                     │
                        ◇ POSITION        ◇   No               │
                        ◇ COORDINATES OF  ◇────────────────────┘
                        ◇ REFERENCE       ◇
                        ◇ POSITION BLOCK  ◇
                        ◇ REQUIRED FOR    ◇
                        ◇ CORRECTION      ◇
                        ◇ ACQUIRED?       ◇
                         ◇◇◇◇◇◇◇◇◇◇◇◇◇◇
                                 │ Yes              ⌐ S09
                                 ▼
              ┌──────────────────────────────────────┐
              │ CALCULATE CORRECTION AMOUNT           │
              └──────────────────────────────────────┘
                                 │
                                 ▼
                              ( End )
```

[FIG. 8]

61a

71

73

72

[FIG. 9]

$(x_4, y_4)$    $(x_6, y_6)$

$(x_2, y_2)$    $(x_8, y_8)$

$(x_{10}, y_{10})$

$(x_{12}, y_{12})$

$(x_1, y_1)$

$(x_3, y_3)$

$(x_{11}, y_{11})$

$(x_5, y_5)$    $(x_7, y_7)$    $(x_9, y_9)$

[FIG. 10]

[FIG. 11]

## INTERNATIONAL SEARCH REPORT

| International application No. |
|---|
| **PCT/JP2023/044116** |

**A. CLASSIFICATION OF SUBJECT MATTER**

*G01N 35/10*(2006.01)i; *G01N 35/00*(2006.01)i
FI: G01N35/10 C; G01N35/00 E

According to International Patent Classification (IPC) or to both national classification and IPC

**B. FIELDS SEARCHED**

Minimum documentation searched (classification system followed by classification symbols)

G01N35/10; G01N35/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2022/196272 A1 (HITACHI HIGH-TECH CORPORATION) 22 September 2022 (2022-09-22)<br>paragraphs [0011]-[0045], fig. 1-6, etc. | 1-9 |
| A | JP 2012-242106 A (HITACHI HIGH-TECHNOLOGIES CORPORATION) 10 December 2012 (2012-12-10)<br>paragraphs [0013]-[0081], fig. 1-11, etc. | 1-9 |
| A | JP 2021-139825 A (HITACHI HIGH-TECH CORPORATION) 16 September 2021 (2021-09-16)<br>paragraphs [0017]-[0076], fig. 1-16, etc. | 1-9 |
| A | JP 2008-281365 A (SHIMADZU CORPORATION) 20 November 2008 (2008-11-20)<br>paragraphs [0017]-[0063], fig. 1-8, etc. | 1-9 |
| A | JP 11-160327 A (ALOKA CO., LTD.) 18 June 1999 (1999-06-18)<br>paragraphs [0021]-[0045], fig. 1-6, etc. | 1-9 |

☐ Further documents are listed in the continuation of Box C.    ☑ See patent family annex.

| | |
|---|---|
| \*   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **31 January 2024** | **13 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/044116**

| Patent document cited in search report | | | Publication date (day/month/year) | Patent family member(s) | Publication date (day/month/year) |
|---|---|---|---|---|---|
| WO | 2022/196272 | A1 | 22 September 2022 | (Family: none) | |
| JP | 2012-242106 | A | 10 December 2012 | US 2014/0093426 A1 paragraphs [0049]-[0114], fig. 1-11, etc. WO 2012/157642 A1 EP 2711716 A1 CN 103547928 A | |
| JP | 2021-139825 | A | 16 September 2021 | (Family: none) | |
| JP | 2008-281365 | A | 20 November 2008 | (Family: none) | |
| JP | 11-160327 | A | 18 June 1999 | (Family: none) | |

Form PCT/ISA/210 (patent family annex) (July 2022)

**REFERENCES CITED IN THE DESCRIPTION**

**Patent documents cited in the description**

- WO 2022196272 A